# EUROPEAN PATENT APPLICATION

(11) **EP 1 406 473 A1**
(43) Date of publication of application: **07.04.2004**
(21) Application number: 02022430.9
(22) Date of filing: 04.10.2002
(51) Int. Cl.: H05B 7/09, H05B 7/14, H05B 7/085

(54) **A composite prebaked carbon electrode intended to be used in electric arc furnaces**

(71) Applicant: SGL CARBON AG, 65203 Wiesbaden (DE)
(72) Inventor: de'Angelis, Daniele, Dr. Ing., 22100 Como (IT); Costantini, Renato, 63040 Folignano (IT); Rotini, Marcello, 05035 Narni (IT)

(57) **Abstract**

A prebaked carbon electrode intended to be used for the production of silicon, phosphorus, ferro-alloys, and other metals in electric arc furnaces with partially submerged electrodes, as well as a method for manufacturing the electrodes according to the invention are provided. The electrode according to the invention comprises at least two different carbon materials over the length of the electrode.

## Description

### INTRODUCTION

The invention relates to a prebaked carbon electrode to be used as an electrode column consisting of various sections and one or more joints in electric arc furnaces, and in particular in electric arc furnaces with partially submerged electrodes, such as the furnaces used for manufacturing metallic silicon, phosphorus, ferro-alloys, and other metals, and it relates to a method for manufacturing such type of prebaked carbon electrodes.

### PRIOR ART / CROSS-REFERENCES TO OTHER PATENTS

In electrometallurgic practice of electric arc furnaces with partially submerged electrodes, according to the state of art, the current-supplying elements for the reaction zone consist of electrode columns. These electrode columns consist of individual components, the electrodes, which usually have a cylindrical form and consist of carbon material. At their faces, they are connected to each other by suitable connecting elements - the nipples -, which secure the mechanical and electrical functions of the columns.

The nipples can be formed differently. In one embodiment, nipples that are separate from the electrodes are provided. In that case, both electrodes to be joined have at their faces (not at the lateral areas) so-called sockets (axial indentations) provided with a (female) thread, in which a nipple can be screwed to join two electrodes. Two standard embodiments of such type of nipples and associated socket female threads exist:
1. The nipple is cylindrical, and respectively half of it is screwed in the cylindrical female thread of the socket of one of the two electrodes to be joined.
2. The nipple is a double cone, and is screwed with one cone in the single cone female thread of the socket of one of the two electrodes to be joined and the other cone in the socket of the second electrode.

In another embodiment, the - usually conically shaped - nipple is an integral part of an electrode at one face of the electrode. This integral nipple can be screwed in the socket provided with a female thread of a second electrode of the same kind, whereby the two electrodes form a column that can be continued by adding further electrodes of the same kind.

According to the state of art, electrodes consist either of a massive cylindrical body, or a cylindrical body with an axial bore, the body having essentially a uniform structure and consisting of carbon material.

During the operation of the furnace, a part of the bottom end of the electrode column is covered by the material filled in the furnace. At the top end, the electrode column is held by "holding rings". In between are the "contact shoes or plates" that consist of metallic blocks. The metallic blocks are ducted-cooled with water. The current flows through the length of the column, entering the column at the "contact plates", and leaving it at the bottom end, usually via an electric arc, into the contents of the furnace.

For industrial practice of electric arc furnaces, it is important, both for technical and economic reasons, that the electrodes can operate at high current load.

In order to make the reflections regarding the following state of art easier to understand, and to be able to describe these in a shorter way, the manufacture of carbon bodies is described in a few sentences here. The terms used for the individual process steps are respectively put in brackets in this brief description.

The so-called green manufacture comprises the process steps mixing and forming or compressing. "Green" material is thus a material that has not yet been burned or not yet been baked or graphitised. In green manufacture, suitable raw materials are prepared, i.e. are provided in the desired grain size fraction and are mixed with a binder that can be carbonised, usually pitch, or also tar (mixing). The mixed material is formed and compressed with different aggregates, e.g. using a die mold, in a stamping device, using an extrusion press, or in an isostatically compressing press (forming and compressing). The thus formed pieces are subsequently baked in a burning process under exclusion of air; a solid product is produced, which is frequently referred to as artificial carbon or hard carbon (initial carbonising). To increase the bulk density of the final product, this artificial carbon can at least once be impregnated, for instance with pitch, and can be re-carbonised (impregnating, re-carbonising), which is rather unusual for carbon electrodes. Graphitising falls away in the process chain for prebaked carbon bodies. The produced prebaked semifinished carbon must be processed, using the normal cutting process (processing). This process is applicable both to prebaked carbon bodies in general, and especially to prebaked carbon electrodes.

Manufacturers of electrodes intended to be used for electric arc furnaces with partially submerged electrodes make efforts to optimise their products. To achieve this, they have even deviated from the principle of uniformity of the carbon material of the electrodes, as described above for the state of art. In European Patent EP 0 142 476, cylindrical prebaked carbon electrodes are described that have a core-sheathing-structure. The axial cylindrical core consists of a carbon material, and the cylindrical sheathing consists of a second different carbon material. Different carbon materials have different characteristics that have an effect on the behaviour of the finished electrode during use. It is, for example, described in EP 0 142 476 that the carbon material of the cylindrical core contains anthracite, and that the carbon material of the cylindrical sheathing contains electrographite. Thus, such type of electrode has a better electric conductivity in the cylindrical sheathing than in the core.

In US patent 3,008,744, a different way to optimise the characteristics of graphite bodies (nipples) is described. This optimisation is based on the knowledge regarding the anisotropic characteristics of some raw materials that are used for the manufacture of the bodies. The longitudinal shape of the grains of some coke types that are used as raw materials is known. The longitudinal shape of the grains results in anisotropic characteristics of these cokes and the carbon and graphite bodies that are made from these. For instance, a good electric conductivity in longitudinal direction of the grains, however, a lower electric conductivity crosswise to it might be determined. By the manufacturing process - in particular during extrusion - the grains are preferably aligned in axial direction of the body. Consequently, the bodies that were made from cokes having a longitudinal grain shape and that were extruded during their manufacture, have anisotropic characteristic, e.g. a good electric conductivity in axial direction of the body, but a lower electric conductivity crosswise to the axial direction.

According to US-Patent 3,008,744, the characteristics of the bodies are optimised by the bodies being warmed up in green condition, and then being formed by upsetting as soft bodies in direction of the longitudinal axis. According to US 3,008,744, the longitudinal carbon grains are, through this upsetting, moved out of their preferred orientation, and are oriented rather statistically. By this, the characteristics of the thus manufactured graphite body change in the way that is desired by the applicant.

In Patent DD 253 839, another way to optimise the characteristics of carbon bodies (electrodes) was described. In this case, the warmed up raw material mixture of thermoplastic, organic binder and carbon grain is not formed by extrusion, but is compressed by vibration in a mould. After compression and cooling, a green carbon body can be removed from the mould. In the present case, the central longitudinal axis of the mould and thus of the green carbon body was apparently oriented horizontally, and the direction of vibration was vertical. To optimise the characteristics of the carbon body (electrode), the ends of the green carbon body were additionally upset by vibration by an axial motion of the two movable faces of the mould during compression. Forming by upsetting of the green carbon body was apparently continued from the faces and so far into the body that the material was compressed in the area of the two sockets, which were later introduced by mechanical processing. Here, the objective of the optimisation was an increased density, and thus strength of the finished electrodes in the area of the sockets.

According to EP 0 142 476, electrodes having a core- sheathing-structure were made from two materials. Both carbon materials with their respective characteristics extended over the entire length of the electrode.

According to US 3,008,744, green carbon bodies were formed by upsetting after extrusion to obtain the optimised graphite bodies. The upsetting process was carried out on the entire length of the body. Consequently, a carbon body having uniform characteristics over the entire length was thereby produced.

According to DD 253 839, only the ends of green carbon bodies were upset. This upsetting happened during compression by vibration. Consequently, a carbon body having different characteristics over the entire length was produced, the raw materials being uniform for the entire body.

According to these documents relating to the state of art, the carbon material or the carbon materials extended over the entire length of the carbon body, the characteristics being either the same or different over the entire length of the finished carbon body.

### OBJECT

The first object of the invention that this patent application is based on was therefore to provide a carbon body that has different characteristics over the length of the finished carbon body when using different carbon materials over the entire length of the carbon body. Another object of the invention was to provide a method for manufacturing such type of carbon bodies.

The first object is solved according to the invention by the characterising clauses of claim 1, namely by the carbon body consisting of a first terminal section, a central section and a second terminal section along its axis and containing at least two different carbon materials. The second object is solved according to the invention by the characterising clauses of claim 11, which are herewith included in the description. Further advantageous embodiments of the invention are given in the dependent claims.

### DESCRIPTION

The electrodes of an electrode column must carry the highest specific mechanic and electrical loads in the area of the sockets. The area around the socket ― also referred to as terminal section ― is therefore, according to the invention, made from a different carbon material than the central section of the electrode between the terminal sections. The electrode thus comprises at least two different carbon materials that can differently be distributed on the three sections of the electrode, namely a first terminal section, a central section, and a second terminal section.

According to one variant, the electrode comprises a carbon material in one terminal section, and a second carbon material in the other terminal section and in the central section.

According to another variant, the electrode comprises one carbon material in the terminal sections, and a second carbon material in the central section.

According to a third variant, the electrode comprises one carbon material in one terminal section, a second carbon material in the central section, and a third carbon material in the second terminal section.

The relative length of the terminal sections referred to the entire length of an electrode also depends on the length of the used nipples. A certain bandwidth of the length of the terminal sections results from this: The terminal sections of the electrodes have a length of 10 to 20% of the entire length of an electrode, and the central section has a length of 60 to 80% of the entire length of an electrode.

The bandwidth of the lengths of the terminal sections is also determined by the presence of transition layers between the carbon materials of the terminal sections and of the central section of the electrode. For an electrode length of 2900 mm, the thickness of the transition layer is between 0 and 200 mm, preferably 60 to 120 mm. The carbon material of the transition layer is either a transition material between the adjacent materials of one terminal section and the central section, or it is a carbon material of own composition that is independent of the adjacent materials of one terminal section and the central section.

The interfaces between the layers of the electrodes, namely the terminal sections, the central section and ― where present - the thinner transition layers, are either flat or profiled. The form of the interface depends on the material characteristics of the terminal sections, the transition layers, and the central section of the electrode, as well as on the production means selected for the individual electrode sections.

The type of the carbon material of an electrode is, apart from the manufacturing technique used, mainly determined by two raw materials: by the carbon material grains and by the organic binder. Alternative raw materials to be used for the grains are coke or graphite or anthracite, which are used either individually or in combination. In the finished electrode, these grains are bound by the baked organic binder and, where applicable, by the baked organic impregnation substance.

The features of the electrodes described above and below are applicable to all electrodes that have a length-diameter-ratio of between 1.8 : 1 and 5 : 1.

As is systematically described above, nipples may be formed differently. In one embodiment, the nipples are independent of the electrodes. In that case, both electrodes to be joined have so-called sockets (axial indentations) with a female thread at their faces (not the lateral areas), in which a nipple can be screwed to join two electrodes. Two standard embodiments of such type of nipples and associated socket female threads exist:
1. The nipple is cylindrical, and respectively half of it is screwed in the cylindrical female thread of the socket of one of the two electrodes to be joined.
2. The nipple is a double cone, and is screwed with one cone into the single cone female thread of the socket of one of the two electrodes to be joined and the other cone in the socket of the second electrode.

In another embodiment, the - usually conically shaped - nipple is an integral part of an electrode at one face of the electrode. This integral nipple can be screwed in the socket provided with a female thread of a second electrode of the same kind, whereby the two electrodes form a column that can be continued by adding further electrodes of the same kind.

Carbon electrodes are usually workpieces of considerable size, weighing several tons. For their manufacture, industrial plants are used, laboratory or test equipment is not purposeful. According to claim 11, at least two different mixtures of carbon grains and organic binder are produced. Of these, one mixture is placed into a provided, basically vertically aligned mould first, and is distributed by an arm that rotates horizontally in the mould. Thereby, a first material layer of the later electrode is formed, which must be treated further. The layer height corresponds to one terminal section of the later finished electrode. In the same mould, a second layer of a second mixture is then placed on top of the mixture that was previously introduced, and is distributed by an arm rotating horizontally in the mould. Depending on the requirement and the structure of the later electrode, further layers of mixtures are placed into the mould and are distributed.

The mixture is or the mixtures are compressed in the mould by a stamping and/or shaking and/or vibrating motion of the mould and mixture together, and additionally by an arm rotating horizontally in the mould and simultaneously stamping the mixture. Simultaneously, the mixture that has been introduced or the mixtures that have been introduced in the mould are exposed to an low grade vacuum during filling and compressing. The processes of filling the mould, compressing the material and generating a vacuum extend over a period of several minutes. This is understandable if one considers that several tons of material must be processed. Once the filling process of the mould and the compressing processes have been completed, the vacuum is also removed from the mould. Immediately after that, a guided weight is placed on the mixture that was last introduced. The functions of the guide of the weight are to safeguard against jamming of the weight in the mould, and to achieve an even load on the mould cross section measuring 0.4 to 1.6 m², and on the material column in the mould, which has a height of approximately three metres and that is initially still warm and thus plastic. After the guided weight has been placed on, this arrangement consisting of mold, guided weight and the thus produced green body comprising at least two layers of different green carbon materials is submitted to shaking for a certain period of time. After shaking the green body cools in the mould. After cooling, the green body is removed from the mould and is introduced in a carbonising furnace. Carbonising is then carried out according to a predetermined temperature-time-program.

Compared to other manufacturing techniques, the technique according to the invention preferably permits the use of several carbon materials over the length of an electrode. In an extrusion process, on the other hand, the difficulties that had to be overcome would be considerable. The extruder had to be filled successively with different carbon materials. The design of an extruder is made for continuous, and not intermittent operation. One cause is the problem of grade uniformity. After a change, it is hardly possible to control the uniformity e.g. of a carbon material in an extruder. It would also be necessary to ensure that no breakage occurs in the extruded column at the section point between two materials.

According to one variant of the manufacture technique of a prebaked electrode according to the invention, not only one mixture, but two or several mixtures are introduced into the mould during filling. In the case of two or several mixtures these mixtures normally are placed successively in the mold. In special cases two or several mixtures are filled simultaneously in the mold, e.g. for the formation of a transition layer between adjacent materials. The mixtures are then - as described above -compressed in the mould by a stamping and/or shaking and/or vibrating motion of the mould and mixture together, and additionally by an arm rotating horizontally in the mould and simultaneously stamping the mixture, and are treated further.

By means of the arm rotating horizontally in the mould, distributing the mixture and simultaneously stamping the mixture, a flat or profiled surface of the compressed mixture is produced. This is purposefully achieved by a flat or profiled form of the bottom side of the arm that compresses the mixture.

According to one variant of the manufacture technique of a prebaked electrode according to the invention, a mould that is disposed essentially horizontally is used for receiving the mixtures. The difference to a mould that is disposed essentially vertically consists in the fact that the provided mixtures are not introduced into the mould on top of each other, but rather next to each other.

First, a mixture is placed in one section of the mould and is distributed by an arm moving horizontally in the mould. Then, a second mixture is placed in another section of the same mould and is distributed by an arm moving horizontally in the mould. These two sections of the mould are initially separated from each other by a separating device, which, however, with increasing filling of the mould by the mixtures, is lifted. As a result, the two mixtures initially contact each other underneath the lifted separating device, homogeneously to interlock when fully compressed after the separating device has completely been removed. If required, additional mixtures are placed and distributed in other sections of the same mould, initially being kept separate from adjacent mixtures by separating devices, subsequently made to contact the adjacent mixtures after the separating devices have been removed, and eventually homogeneously interlocking with those during subsequent compression. The compression of the mixtures in the mould is effected by a stamping and/or shaking and/or vibrating motion of mould and mixture together, and additionally by an arm that is moved horizontally in the mould and that stamps the mixture(s) after removal of the separating device(s). The mixture that has been placed is or the mixtures that have been placed in the mould are exposed to an low grade vacuum during filling and compressing. After the filling of the mould has been completed, the compressed mixtures are loaded in the mould by placing a guided and simultaneously modelling weight onto the introduced mixtures. The thus produced green body consisting of at least two sections of different green carbon materials is cooled in the mould and is removed from the mould after cooling. In this regard, one terminal section consists, for instance, of one carbon material, and the other terminal section as well as the central section consist of a different green carbon material. After cooling, the green body is removed from the mould and is introduced into a carbonising furnace. Carbonising according to a predetermined temperature-time-program follows.

The organic, thermoplastic binders are rigid at room temperature, thus not wetting the carbon grain that is to be mixed in. For this reason, the raw materials carbon grain and binder are homogeneously mixed at between 100 and 150°C, preferably between 120 and 140°C. Mixtures that have been prepared in this manner are then placed in the mould at the mentioned temperatures, and are compressed there in a warm condition and according to the manner described above.

### EXAMPLES

### Example 1

Prebaked carbon electrodes 1 having a diameter of 1018 mm and a length of 2900 mm were produced. The electrodes 1 were respectively provided with a conical nipple 2 formed on one side, while on the other side, a respective socket 3 with inwrought, conical female thread was provided.

For each such electrode 1, two different green mixtures were produced. The dry percentages of mixture A contained 50 weight per cent of anthracite grains and flour, and 50 weight per cent consisted of electrographite grains and flour. The dry percentages of mixture B contained 90 weight per cent of anthracite grains and flour, and 10 weight per cent consisted of electrographite grains and flour. The dry percentages of mixtures A and B were mixed with the respectively required quantity of coal tar pitch at approximately 130 °C. Mixtures A and B were held ready to be filled into the electrode mould.

After the mould had been prepared, initially 1000 kg of mixture A were placed in the mould and were distributed by an arm rotating horizontally in the mould. Then, 2000 kg of mixture B were placed in the mould and were disposed as a layer on top of mixture A, and were distributed by an arm rotating horizontally in the mould. As a third layer, 1000 kg of mixture A were filled in the mould and disposed on top of mixture B, and were distributed. From the beginning of the filling process of the mixtures, the green material was compressed by a stamping and vibrating motion of the mould and mixture together, and additionally by an arm rotating horizontally in the mould and simultaneously stamping the mixture. Simultaneously, the green material that had been introduced in the mould was exposed to an low grade vacuum during filling and compressing. The processes of filling the mould, compressing the material and generating a vacuum extended over a period of several minutes. Once the filling process of the mould and the compression of the material had been completed, the vacuum was also removed from the mould. Immediately after that, a guided weight was placed on the mixture that was last introduced. The functions of the guide of the weight were to safeguard against jamming of the weight in the mould, and to achieve an even load on the mould cross section measuring 0.81 m² and on the material column in the mould, which had a height of approximately three metres, and that was initially still warm and thus plastic. After that, the mould with the multilayer body comprising various green carbon materials that had been produced in it and had been compressed, underwent a shaking movement for a certain period of time and then was cooled down to room temperature. After cooling, the green body was removed from the mould and was introduced in a carbonising furnace. Carbonising according to a predetermined temperature-time-program followed. Finally, the carbonised electrodes were provided with an integral conical nipple 2 at respectively one face, and with a socket 3 having an inwrought conical female thread on the respectively other face, and were processed to end dimensions.

### Example 2

Prebaked carbon electrodes 1 having a diameter of 1018 mm and a length of 2900 mm were produced. The electrodes 1 had respectively a socket 3 with inwrought, cylindrical female thread at both faces.

### For each electrode 1, three different green mixtures were produced:

The dry percentages of mixture A contained 65 weight per cent of electrographite grains and flour, and 35 weight per cent consisted of anthracite grains and flour. The dry percentages of mixture B contained 50 weight per cent of electrographite grains and flour, and 50 weight per cent consisted of anthracite grains and flour. The dry percentages of mixture C contained 10 weight per cent of electrographite grains and flour, and 90 weight per cent consisted of anthracite grains and flour.

The dry percentages of mixtures A, B and C were mixed with the respectively required quantity of coal tar pitch at approximately 130°C. Mixtures A, B and C were held ready to be filled into the electrode mould.

After the mould had been prepared, initially 900 kg of mixture A were placed in the vertically aligned mould and were distributed by an arm rotating horizontally in the mould. This layer corresponds to one terminal section 4 of the later carbon electrode 1. Then, 300 kg of mixture B were placed in the mould and were disposed as a layer on top of mixture A and distributed by the arm rotating horizontally in the mould. This layer corresponds to a transition layer of the later carbon electrode 1. As a third layer, 2500 kg of mixture C were filled in the mould, and were disposed as a layer on top of mixture B and were distributed. This layer corresponds to the central section 5 of the later carbon electrode 1. Further layers of 300 kg of mixture B and of 900 kg of mixture A followed. The thinner one of these layers corresponds to a transition layer, and the thicker layer corresponds to a terminal section 4 of the later carbon electrode 1.

From the beginning of the filling process of the mixtures, the green material was compressed by a stamping and vibrating motion of the mould and mixture together, and additionally by an arm rotating horizontally in the mould and simultaneously stamping the mixture. Simultaneously, the green material that had been introduced in the mould was exposed to an low grade vacuum during filling and compressing. The processes of filling the mould, compressing and generating a vacuum extended over a period of several minutes. Once the filling process of the mould and the compression of the material had been completed, the vacuum was also removed from the mould. Immediately after that, a guided weight was placed on the mixture that was last introduced. The functions of the guide of the weight were to safeguard against the weight jamming in the mould, and to achieve an even load on the mould cross section measuring 0.81 m², and on the material column in the mould, which had a height of approximately three metres, and that was initially still warm and thus plastic. After that, the mould with the multilayer body comprising various green carbon materials that had been produced in it and had been compressed, underwent a vibrating movement for a certain period of time and then was cooled down to room temperature. After cooling, the green body was removed from the mould and was introduced in a carbonising furnace. Carbonising followed according to a predetermined temperature-time-program. Finally, the carbonised electrodes were provided with respectively one socket 3 with an inwrought cylindrical female thread on both faces, and were processed to end dimensions.

A flat or profiled interface between the layers can be obtained.

Apart from the examples mentioned above, a multitude of additional bodies produced according to the teaching of this invention could be described. Consequently, the invention is not limited to the embodiments that have been described in the examples. Therefore, also those composite materials that have not been described and that a person skilled in the art could produce, based on the information he is provided with by this disclosure, are intended to be included in this patent application.

The following figures further illustrate the invention in an exemplary manner. It is shown in:
- Fig. 1: a lateral view of a prebaked and processed carbon electrode 1 with an integral nipple 2 and
- Fig. 2: a section carried out parallel to the longitudinal axis of the electrode 1 through the electrode 1 with sockets 3 that are provided at the faces, and internal threads.

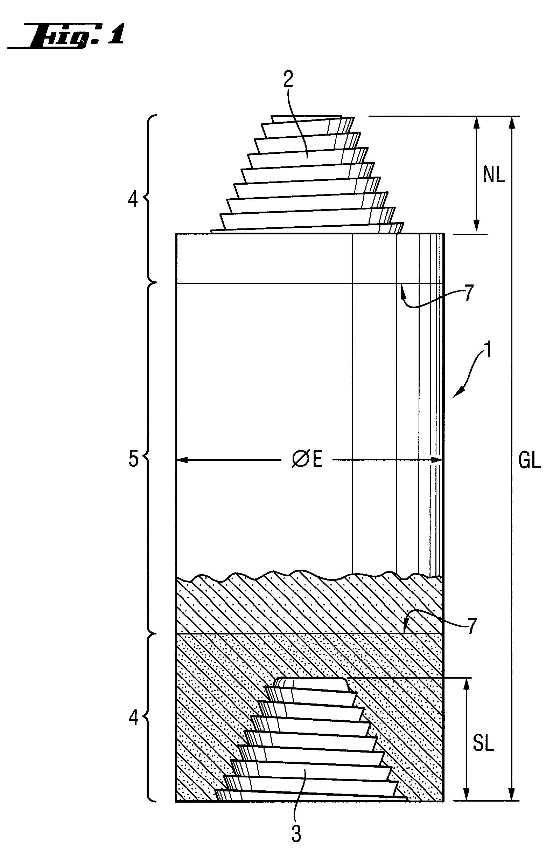

Fig. 1 shows a prebaked and processed carbon electrode 1 from the longitudinal side with an opened portion that shows a section in the area of the socket 3. The most prominent characteristic is the integral, conical nipple 2 at one face. The length of this nipple is, depending on the diameter of the electrode 1, between 220 and 440 mm. The thread of the nipple comprises only a few thread turns. A matching thread having the same number of thread turns has been made in the socket 3 on the opposite face of the electrode 1 as female thread. The entire length GL of the electrode 1 is composed of the individual sections, namely a terminal section 4, a central section 5, a terminal section 4, and the length NL of the integral nipple 2. The length of the terminal section ) amounts to 10 to 20% of the entire length GL of the electrode 1. The length of the terminal section 4 on the one side of the electrode 1 is larger than the depth SL of the socket 3, and, on the one face of the electrode 1, larger than the length NL of the integral nipple 2. The length of the central section 5 amounts to 60 to 80% of the entire length GL of the electrode 1.

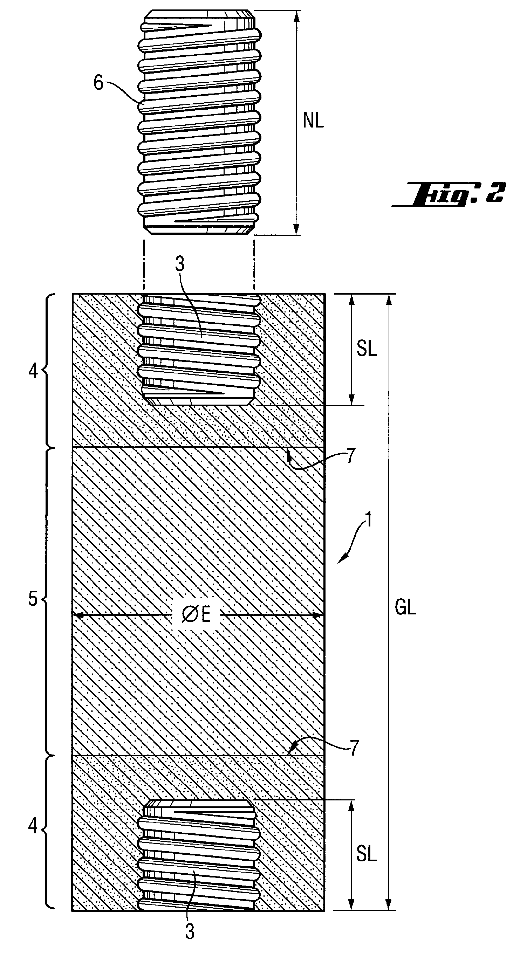

Fig. 2 shows a section carried out parallel to the longitudinal axis of the electrode 1 through a different embodiment of a prebaked and processed carbon electrode 1. In this case, the nipple 6 is not an integral component of the electrode 1. Instead, the nipple 6 is separate. It has a cylindrical thread. The nipple is dimensioned such that half of its length NL can be screwed in the socket 3 having the cylindrical female thread at the face of the electrode 1. The entire length GL of the electrode 1 is composed of the individual sections, namely a terminal section 4, a central section 5, a second terminal section 4. The length of one terminal section 4 amounts to 10 to 20% of the entire length GL of the electrode 1, and the length of the terminal section 4 is larger than the depth SL of the socket 3. The length of the central section 5 amounts to 60 to 80% of the entire length GL of the electrode 1.

### List of numerals and abbreviations

- 1: carbon electrode
- 2: integral conical nipple
- 3: socket with female thread
- 4: terminal section of an electrode
- 5: central section of an electrode
- 6: separate nipple with cylindrical thread
- 7: interface between two layers of a carbon electrode
- GL: entire length
- NL: length of the integral nipple
- SL: depth of the socket
- ØE: diameter of the electrode

## Claims

1. A prebaked carbon electrode (1) intended to be used as an electrode column consisting of several bodies and one joint or several joints in electric arc furnaces and, more particularly, in submerged arc furnaces, such as the furnaces for the production of silicon metal, phosphorus, ferro-alloys, and other metals, **characterised in that** said electrode (1), which consists of a first terminal section (4), a central section (5) and a second terminal section (4) along its axis, contains at least two different carbon materials.

2. The electrode (1) according to claim 1, **characterised in that** this electrode (1) contains a carbon material in one terminal section (4), and a second carbon material in the other terminal section (4) and in the central section (5).

3. The electrode (1) according to claim 1, **characterised in that** this electrode (1) contains a carbon material in the terminal sections (4), and a second carbon material in the central section (5).

4. The electrode (1) according to claim 1, **characterised in that** this electrode (1) contains a carbon material in one terminal section (4), a second carbon material in the central section (5), and a third carbon material in the second terminal section (4).

5. The electrode (1) as claimed in any of claims 1 to 4, **characterised in that** the terminal sections (4) have each a length of 10 to 20 % of the total length of an electrode (1), and the central section (5) has a length of 60 to 80 % of the total length of an electrode (1).

6. The electrode (1) as claimed in any of claims 1 to 5, **characterised in that** the electrode (1) contains an additional thinner transition layer of between 0 and 200 mm thickness, preferably of between 60 and 120 mm thickness, of a third carbon material between a carbon material of one terminal section (4) and a second carbon material of the central section (5), this third carbon material being either a transition material between the adjacent materials of one terminal section (4) and the central section (5), or a carbon material that is independent of the adjacent materials of one terminal section (4) and the central section (5).

7. The electrode (1) as claimed in any of claims 1 to 6, **characterised in that** the interfaces (7) between the layers of the electrodes (1), namely the terminal sections (4), the central section (5) and ― if present ― the thinner transition layers, are flat or profiled.

8. The electrode (1) as claimed in any of claims 1 to 7, **characterised in that** the carbon material of the electrode (1) contains either coke or graphite or anthracite granules, or various of these granules, and that the carbon material contains coked organic binder.

9. The electrode (1) as claimed in any of claims 1 to 8, **characterised in that** the electrode (1) has a length-diameter-ratio of between 1.8:1 and 5:1.

10. The electrode (1) as claimed in any of claims 1 to 9, **characterised in that** the electrode (1) has an integrated conical nipple (2) at one terminal section (4) and a socket (3) with a conical inside thread at the other terminal section (4), or **in that** the electrode (1) has a socket (3) having a cylindrical or conical inside thread at both terminal sections (4).

11. A method for manufacturing a prebaked carbon electrode (1) intended to be used as an electrode column consisting of several bodies and one joint or several joints in electric arc furnaces and, more particularly, in submerged arc furnaces, such as the furnaces for the production of silicon metal, phosphorous, ferro-alloys, and other metals, **characterised in that** at least two different mixtures consisting of carbon granules and organic binder are produced,
first one layer of a mixture is placed in a mould and is distributed by means of an arm rotating horizontally in the mould,
then a second layer of a second mixture is placed in the same mould on top of the first mixture that was previously introduced, and is distributed by means of an arm rotating horizontally in the mould,
if required, additional layers of mixtures are placed in the mould and are distributed,
the mixture or mixtures is or are compressed in the mould by a stamping and/or shaking and/or vibrating motion of the mould and mixture together, and additionally by an arm rotating horizontally in the mould and simultaneously stamping the mixture,
the mixture that has been introduced or the mixtures that have been introduced in the mould are exposed to an low grade vacuum during filling and compressing,
the compressed mixtures are loaded in the mould after completing the filling of the mould by placing a guided weight on the mixture that was introduced last then this arrangement is shaked for some additional time,
the thus produced green body consisting of at least two layers of different green carbon materials is cooled in the mould and is removed from the mould after cooling,
the green body is placed in a carbonising furnace and is carbonised according to a predetermined temperature-time-program.

12. The method for manufacturing a prebaked carbon electrode (1) according to claim 11, **characterised in that** either one mixture is placed in the mold, is distributed and is compressed there or various mixtures are placed in the mould successively, in special cases simultaneously, the mixtures are distributed and are compressed there.

13. The method for manufacturing a prebaked carbon electrode (1) according to claims 11 and 12, **characterised in that** a flat or profiled surface (7) of the compressed mixture is produced by means of the arm rotating horizontally in the mould and simultaneously stamping the mixture.

14. The method for manufacturing a prebaked carbon electrode (1) as claimed in any of claims 11 to 13, **characterised in that** the mixture or mixtures are placed in a mould that stands essentially vertical.

15. The method for manufacturing a prebaked carbon electrode (1) as claimed in any of claims 11 to 13, **characterised in that**
at least two different mixtures of carbon granules and organic binder are produced,
the mould is disposed essentially horizontally,
first a mixture is placed in one section of the mould and is distributed by an arm moving horizontally in the mould,
then a second mixture is placed in the other section of the same mould and is distributed by an arm moving horizontally in the mould,
these two sections of the mould are initially separated from each other by a separating device, which, however, with increasing filling of the mould by the mixtures is lifted, so that the two mixtures initially contact each other below the lifted separating device, and then interlock homogeneously when fully compressed, after the separating device has completely been removed,
if required, additional mixtures are placed and distributed in other sections of the same mould,
the mixtures are compressed in the mould by a stamping and/or shaking and/or vibrating motion of mould and mixture together, and additionally by an arm that is moved horizontally in the mould and that stamps the mixture after removal of the separating device(s),
the mixture that has been placed or the mixtures that have been placed in the mould are exposed to an low grade vacuum during filling and compressing,
the compressed mixtures are loaded in the mould, after completion of the filling of the mould, by placing a guided and simultaneously modelling weight onto the introduced mixtures then this arrangement is shaked for some additional time,
the thus produced green body consisting of at least two sections (terminal section (4) and central section plus terminal section (5) plus (4)) of different green carbon materials is cooled in the mould and is removed from the mould after cooling,
the green body is introduced in a carbonising furnace, and is carbonised according to a predetermined temperature-time-program.

16. The method for manufacturing a prebaked carbon electrode (1) as claimed in any of claims 11 - 15, **characterised in that** the mixtures and the mould are used in a preheated condition at temperatures of between 100 and 150 °C, preferably between 120 and 140 °C, for the steps of filling the mould and compressing the mixture.
